# EUROPÄISCHE PATENTSCHRIFT

(11) **EP 0 451 635 B1**
(45) Veröffentlichungstag und Bekanntmachung des Hinweises auf die Patenterteilung: **23.12.1998**
(21) Anmeldenummer: 91104944.3
(22) Anmeldetag: 28.03.1991
(51) Int. Cl.: B32B 18/00, B32B 5/20, C04B 35/52

(54) **Blähgraphit enthaltende Leichtformkörper, deren Herstellung und deren Verwendung**
Light moulded bodies containing expanded graphite, their preparation and their use
Corps légers moulés contenant du graphite expansé, leur procédé de préparation et leur utilisation

(30) Priorität: 11.04.1990 DE 4011697
(43) Veröffentlichungstag der Anmeldung: 16.10.1991
(73) Patentinhaber: BAYER AG, 51368 Leverkusen (DE)
(72) Erfinder: von Bonin, Wulf, Dr., W-5068 Odenthal (DE); von Gizycki, Ulrich, Dr., W-5090 Leverkusen 3 (DE)

(56) Entgegenhaltungen:
- EP-A- 0 059 866
- EP-A- 0 061 636
- EP-A- 0 164 984
- DE-A- 3 912 552
- GB-A- 2 169 273
- US-A- 4 892 783
- PATENT ABSTRACTS OF JAPAN ( OILES IND. CO. LTD. ) 28. Juli 1989
- PATENT ABSTRACTS OF JAPAN ( TOSHIBA CORP. ) 30. April 1988

## Beschreibung

Die vorliegende Erfindung betrifft sandwichartige Leichtformkörper, deren Kernmaterial expandierten Blähgraphit enthält, ein Verfahren zu deren Herstellung und deren Verwendung.

Bekannte sandwichartige Leichtformkörper mit höherer Wärmebeständigkeit enthalten als Kernmaterial, z.B. Schaumglas, das durch Verklebung mit den Deckschichten verbunden wurde. Nachteilig hierbei ist, daß die Wärmebeständigkeit für viele Zwecke nicht hoch genug ist und sich die Herstellung von speziell geformten Leichtformkörpern schwierig gestaltet.

Es wurden nun sandwichartige Leichtformkörper gefunden, die dadurch gekennzeichnet sind, daß ihr Kernmaterial formgemäß expandierten NOₓ- und/oder SOₓ-Blähgraphit und Bindemittel enthält und mindestens eine Deckschicht aus einem thermoplastischen Material besteht.

Das Kernmaterial der erfindungsgemäßen Leichtformkörper kann nur aus NOₓ- und/oder SOₓ-expandiertem Blähgraphit bestehen die erhalten werden, wenn man nicht oder nur partiell expandierten NOₓ- und/oder SOₓ- Blähgraphit zusammen mit Bindemitteln und/oder Füllstoffen auf Temperaturen erhitzt, bei denen der Blähgraphit expandiert.

Als Blähgraphit kommen z.B. modifizierte Graphite infrage, die beim Erhitzen auf Temperaturen von über 150°C expandieren. Solche Graphite sind bekannt und im Handel erhältlich. Sie können als Treibmittel z.B. NOₓ oder SOₓ eingelagert enthalten. Überraschenderweise treten durch diese agressiven Treibgase keine Störungen auf.

Der Blähgraphit kann z.B. als schuppiges oder flockiges Pulver, als Granulat oder in Form vorgeformter Teile eingesetzt werden. Es kommen auch Mischungen von Blähgraphiten verschiedener Formen und/oder Arten infrage. Der Blähgraphit kann auch schon teilweise expandiert sein bevor er eingesetzt wird.

Als Bindemittel, die im Gemisch mit zu expandierendem Blähgraphit eingesetzt werden können, kommen z.B. Thermoplaste infrage, wie sie weiter unten als Material fuhr die Deckschichten beschrieben werden, aber auch ortho-, meta-, Pyro- und Polyphosphate, Phosphonate, Borate und Silikate, die als kationische Komponenten Metallionen von Metallen der 1. bis 3. Gruppe des Periodensystems, Ammonium oder Amine enthalten, sowie Destillationsrückstände und Kohlepulver. Soweit es sich um Phosphate, Polyphosphate, Phosphonate, Borate und Silikate mit einer kationischen Komponente auf Aminbasis handelt kommen als Amine z.B. Ammoniak, Ethylendiamin, Propylendiamin, Polyalkylenpolyamine, Alkanolamine, Anilin, Anilin-Formaldehyd-Kondensate und Melamin infrage. Die Bindemittel sind vorzugsweise schmelzbar.

Bei den Phosphaten, Polyphosphaten, Phosphonaten, Boraten und Silikaten sind Borax, Ammoniumphosphat, Ammoniumpolyphosphat, Ethylendiaminphosphat, Melaminphosphat, Melaminborat, Melamindiphosphat, Melaminpolyphosphat, Natriumpolyphosphat, Zink-, Calcium-, Aluminium- und Magnesiumphosphonate und -polyphosphate und Alkalisilikate bevorzugt, bei den Phosphonaten, insbesondere solche, die
a) eine Phosphonatkomponente der Formel (I) enthalten 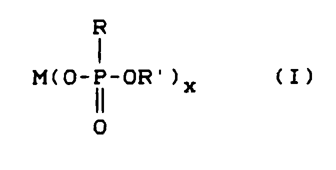 in der
   - M: für Aluminium, Magnesium oder Calcium,
   - R: für einen aliphatischen Rest mit 1 bis 6 C-Atomen oder einen aromatischen Rest mit 6 bis 10 C-Atomen,
   - R': für Wasserstoff, einen alphatischen Rest mit 1 bis 6 C-Atomen oder einen aromatischen Rest mit 6 bis 10 C-Atomen und
   - x: für eine ganze Zahl entsprechend der Wertigkeit von M stehen und
   auf ein Äquivalent in der Phosphonatkomponente enthaltener OR'-Gruppierungen 0,05 bis 1 Mol eines Amins aus der Gruppe Ammoniak, Ethylendiamin, Polyethylenpolyamin, Melamin, Guanidin, Harnstoff, Dicyandiamid, Anilin-Formaldehyd-Kondensat, Ethanolamin oder Dimethylaminopropylamin kommt oder
b) ein Metall- oder Metalloidsalz einer Phosphonsäure der Formel (II) sind 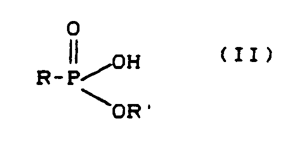 in der
   - R: für einen geradkettigen oder verzweigten, gegebenenfalls durch Halogen und/oder OH substituierten C₁- bis C₃-Alkylrest und
   - R': für Wasserstoff oder einen C₁- bis C₃-Alkylrest stehen und
   wobei das Metall oder Metalloid aus den Gruppen IIA, IIB, IIIA, IVA oder VA des Periodensystems ausgewählt ist oder
c) einer der Formeln (III) bis (V) entsprechen 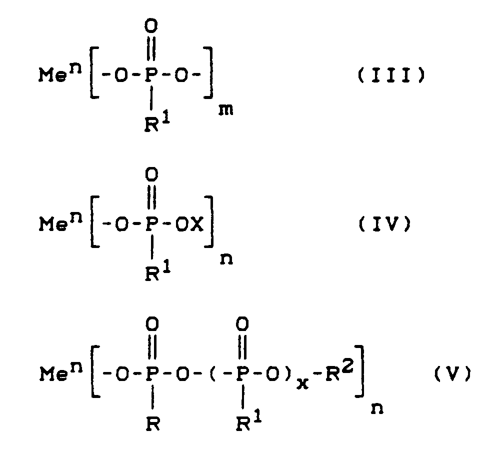 in denen jeweils
   - Me: für ein Metall der 2. oder 3. Haupt- oder Nebengruppen des Periodensystems,
   - n: für die Wertigkeit des Metalls Me,
   - m: für n/2,
   - R, R¹ und R²: jeweils unabhängig voneinander für einen organischen Rest mit 1 bis 18 C-Atomen,
   - X: für Wasserstoff, Ammonium, Alkylammonium oder ein Äquivalent eines Metalls und
   - x: für Null oder eine ganze Zahl von 1 bis 20
   stehen.

Als Bindemittel bevorzugt sind auch Phosphate, ganz besonders neutrales Ethylendiaminphosphat und Calcium- und Aluminiumsalze von Polyphosphorsäuren.

Soweit die Bindemittel Destillationsrückstände sein können, kommen beispielsweise Destillationsrückstände infrage, wie sie bei der Herstellung von aromatischen Isocyanaten oder bei der Teeröl- und Erdöldestillation anfallen. Letztere sind unter der Bezeichnung "Bitumen" bekannt und werden besonders vorteilhaft im Gemisch mit Phosphorverbindungen eingesetzt, wie auch z.B. Steinkohlepulver, oder Pulver sonstiger teerreicher Kohlen oder Pflanzenbestandteile.

Es können auch sonst Gemische verschiedener Bindemittel eingesetzt werden.

Die Menge an Bindemitteln, bezogen auf das Gesamtgewicht der Leichtformkörper, kann beispielsweise 0 bis 85 Gew.-% betragen. Vorzugsweise beträgt sie 10 bis 35 Gew.-%.

Überraschenderweise schützen Phosphor enthaltende Bindemittel, insbesondere Phosphate und Phosphonate der genannten Art, das Kernmaterial erfindungsgemäßer Leichtformkörper gut gegen den oxydativen Angriff von Sauerstoff oder Luft, vor allem bei Temperaturen über 500°C. Dabei sind die Phosphate besonders wirkungsvoll, was von Bedeutung ist für die Einsetzbarkeit der Leichtformkörper im Hochtemperaturbereich. Hierbei bleiben die elektrische und die thermische Leitfähigkeit erhalten, was für spezielle Einsatzzwecke, z.B. als Heizelemente, von Interesse ist.

Falls gewünscht kann der zu expandierende Blähgraphit auch in Kombination mit unter den jeweiligen Herstellungsbedingungen schmelzenden und/oder nicht schmelzenden Füllstoffen eingesetzt werden. Solche Füllstoffe können z.B. faser-, kugel-, hohlkugel- oder pulverförmig sein und z.B. aus Glas, Quarz, Kohlenstoff, Kreide, Asbest, Flugasche, Talkum, gebranntem oder gelöschtem Kalk, Hydrargillit, Zement und/oder Kaolin bestehen. Bezogen auf das Gesamtgewicht der Leichtformkörper können z.B. 0 bis 75 Gew.-% Füllstoffe eingebracht werden, vorzugsweise 0 bis 50 Gew.-%.

Als thermoplastische Materialien, aus denen mindestens eine Deckschicht der erfindungsgemäßen Leichtformkörper besteht, beim Vorhandensein von zwei Deckschichten vorzugsweise beide, die aber gegebenenfalls auch als Bindemittelzusatz zu dem zu expandierenden Blähgraphit verwendet werden können, kommen z.B. organische und/oder anorganische Materialien infrage, die beim Erhitzen auf die Herstellungstemperaturen für erfindungsgemäße Leichtformkörper erweichen oder schmelzen, sich aber nicht in unerwünschter Weise zersetzen. Je nach dem welche Herstellungstemperaturen man wählen will kann es sich dabei um sehr verschiedenartige Materialien handeln. Vorzugsweise weisen die thermoplastischen Materialien eine Glastemperatur von über 150°C auf.

Hohe Herstellungstemperaturen für erfindungsgemäße Leichtformkörper, z.B. solche über 900°C, können dann angewendet werden, wenn man als thermoplastische Materialien, z.B. Gesteinsmehle, insbesondere gesinterte oder aufgeschmolzene Gesteinsmehle, Schlacken, Emaillfritten, Tonmineralien, Porzellanerden, sonstige keramische Grundmaterialien, Gläser oder entsprechend hoch schmelzende Metalle oder Metallegierungen einsetzt, z.B. Stahl, Kupfer, Aluminium und/oder Silber.

Vorzugsweise werden für erfindungsgemäße Leichtformkörper Herstellungstemperaturen unter 1500°C, insbesondere solche zwischen 300 und 900°C angewendet und in diesem Bereich erweichende oder schmelzende Metalle, Metallegierungen, Gläser, glaskeramische Massen, organisch-anorganische oder organisch-aromatische Kunststoffe eingesetzt. Als Metalle kommen hier z.B. Aluminium, Blei, Zink und diese enthaltende Legierungen infrage, als Gläser insbesondere silikatische Gläser wie Natron-Kalk-Gläser, Borsilikat-Gläser, Alumosilikat-Gläser und Gläser mit kleinen Ausdehnungskoeffizienten, als organisch-anorganische Kunststoffe z.B. Silikone, sog. Ormocere (das sind organisch modifizierte Keramikmassen) und Phosphazene, als organisch-aromatische Kunststoffe z.B. Polyester, Polyether, Polyepoxide, Polysulfide, Polysulfone, Polyimide, Polyamide, Polyanhydride, Polyketone, Polycarbonate, Polyhydantoine, Polyoxazindione, Polyharnstoffe, Polycarbodiimide, Polyurethane und LC-Polymere, die jeweils in der Polymerkette aromatische Strukturen enthalten, sowie Mischungen davon. Besonders bevorzugt sind silikatische Gläser, Aluminium, Aluminiumlegierungen und Polyphenylensulfid.

Im Rahmen der vorliegenden Erfindung können auch erst bei hohen Temperaturen erweichende Deckschichten zum Einsatz gelangen, die gegebenenfalls bei höheren Temperaturen als der Herstellungstemperatur für die Leichtformkörper thermoplastisch verformbar sind. Beispiele für derartige Materialien sind Stahl, Kupfer, Silber, keramische Massen und Quarz.

Insbesondere bei niedrigen Herstellungstemperaturen für erfindungsgemäße Leichtformkörper, z.B. bei solchen unter 300°C, kommen auch Polyolefine als thermoplastische Materialien in Betracht, z.B. Polypropylen, Polyethylen, Polybutadien, Polystyrol, Polyvinylacetat, Polyacrylatester oder Mischungen davon. Hierbei besteht bisweilen aber die Gefahr, daß sich die Polyolefine in unerwünschter Weise zersetzen, bevor der eingesetzte Blähgraphit ausreichend expandiert ist.

Thermoplastische Materialien für Deckschichten der erfindungsgemäßen Leichtformkörper können z.B. in Form von Platten, Pulvern, Granulaten, Fasern oder als textile Flächengebilde (Matten, Vliese) eingesetzt werden. Bevorzugt ist Plattenware. Die thermoplastischen Materialien können gegebenenfalls Zusatzstoffe, z.B. Füllstoffe, Verstärkungsfasern, Stabilisatoren und/oder Farbstoffe enthalten.

Thermoplastische Materialien als Bindemittelzusatz zu dem zu expandierenden Blähgraphit werden vorzugsweise in Form von Pulvern, Granulaten oder Kunstfasern eingesetzt. Man kann in speziellen Fällen auch hier die thermoplastischen Materialien in Plattenform verwenden, wenn man diese in die Blähgraphit-Schicht einbettet.

Erfindungsgemäße sandwichartige Leichformkörper kann man dadurch erhalten, daß man zwischen zwei Deckschichten, von denen mindestens eine aus einem thermoplastischen Material besteht, expansionsfähigen, Bindemittel enthaltenden NOₓ- und/oder SOₓ-Blähgraphit sich bei Temperaturen im Bereich 200 bis 2000°C expandieren läßt.

Das thermoplastische Material und das expansionsfähigen NOₓ- und/oder SOₓ-Blähgraphit enthaltende Material kann wie weiter oben beschrieben beschaffen sein.

Bevorzugte Temperaturen für die Herstellung sind solche von 300 bis 900°C, insbesondere solche von 300 bis 600°C.

Gemäß einer besonderen Ausführungsform des Herstellungsverfahrens für erfindungsgemäße Leichtformkörper wird beispielhaft wie folgt verfahren:

Man arbeitet in einer Presse, mit der sich Platten oder andere Formen herstellen lassen. Zunächst wird ein flachliegender Distanzrahmen aus Stahl eingelegt, dann wird das thermoplastische Material für die eine Deckschicht eingebracht, dann das expansionsfähige, Blähgraphit enthaltende Material, dann gegebenenfalls das Material für eine zweite Deckschicht, die, sofern sie vorhanden ist, aus thermoplastischen oder anderem Material bestehen kann. Der Distanzrahmen ist dann noch nicht aufgefüllt, sondern läßt noch Raum für die Expansion des Blähgraphits. Dazu erhitzt man auf die jeweils gewünschte Temperatur, wobei darauf geachtet wird, daß die Presse druckfest fixiert und im wesentlichen geschlossen ist, die Expansionsgase jedoch noch entweichen können. Die den Distanzrahmen abdeckenden Pressenteile (z.B. Stahlplatten) werden vorzugsweise oberflächlich mit einem Formtrennmittel versehen, z.B. für relativ niedrige Temperaturen mit Papier oder talkumierter Aluminiumfolie und für relativ hohe Temperaturen mit Graphit, Talkum oder Aluminiumoxidpulver. Nachdem im Forminneren die gewünschte Temperatur erreicht worden ist wird abgekühlt und anschließend der erhaltene Leichtformkörper der Form entnommen.

Häufig ist es vorteilhaft, die Blähgraphit-Expansion unter Ausschluß von Sauerstoff stattfinden zu lassen.

Die Dicke der Deckschicht(en) und die Dichte des Kernmaterials kann man durch die Mengen der dafür in die Presse eingebrachten Materialien steuern. Die aus thermoplastischem Material bestehenden Deckschichten geben die Oberflächenform der Presse wieder, So können z.B. auch mit einer Prägung oder Auswölbung versehene Leichtformkörper erhalten werden.

Das Kernmaterial erfindungsgemäßer Leichtformkörper weist im allgemeinen ein Raumgewicht von weniger als 0,9 g/cm³ auf. Vorzugsweise liegt das Raumgewicht im Bereich 0,05 bis 0,5 g/cm³. Das Kernmaterial ist in der Regel mit dem Material der Deckschichten fest verbunden, insbesondere wenn letzteres bei der Herstellung der Leichtformkörper partiell in das Kernmaterial eingesickert ist.

Erfindungsgemäße Leichtformteile können auf einfache Weise z.B. als Platten, Profile oder in anderen, durch schalige Formgebung zu erzielenden Formen hergestellt werden. Infrage kommen auch zylindrische Formen, bei denen der Mantel aus einem der beschriebenen thermoplastischen Materialien für Deckschichten und der Kern aus expandiertem Blähgraphit und gegebenenfalls Zusätzen besteht. Erfindungsgemäße Leichtformteile halten hohen Temperaturen stand, weisen einen duktilen, nicht spröden Kern auf und sind thermoplastisch weiter verform- und verarbeitbar. Erfindungsgemäße Leichtformteile sind im allgemeinen sowohl hinsichtlich thermischer Belastbarkeit als auch hinsichtlich niedrigen Raumgewichts den bekannten Produkten überlegen, insbesondere wenn man zähe Deckschichten aus leichten organischen Polymeren, z.B. solche aus Polyphenylensulfid oder Polyimiden oder aus Aluminium, vorsieht, Das Kernmaterial erfindungsgemäßer Leichtformteile ist im allgemeinen thermisch und elektrisch leitfähig und kann in Kombination mit isolierenden und metallischen Deckschichten neue Anwendungsmöglichkeiten erschließen.

Die vorliegende Erfindung betrifft auch die Verwendung von sandwichartigen Leichtformkörpern, deren Kernmaterial expandierten Blähgraphit enthält und bei denen mindestens eine Deckschicht aus einem thermoplastischen Material besteht beim Bau von Geräten und Gehäusen, die bei hohen Temperaturen einsetzbar sind, Hochgeschwindigkeits-Flugkörpern, Stoßabsorbern, Raketenmotoren, Turbinen, Verbrennungsmotoren, Abgaskanälen, Antennen und thermischen, elektromagnetischen und/oder elektrischen Abschirm- und Isoliereinrichtungen.

In den folgenden Beispielen beziehen sich Teile und Prozente auf das Gewicht, falls nicht anderes angegeben ist.

### Beispiele

### Beispiel 1

Handelsüblicher NOₓ-Blähgraphit, der beim Erhitzen auf 600°C drucklos auf mehr als das 15-fache Volumen expandiert, wurde mit einem Bindemittel vermischt, das durch Umsetzung von 1 Mol Aluminiumhydroxyd, 3 Mol Dimethylmethylphosphonat und Wasser im Autoklaven bei 180°C hergestellt wurde und als wäßrige klare Lösung anfiel.

Eine Stahlform bestehend aus einem Distanzrahmen aus zunderarmen Stahl, der eine innere Dimensionierung von 12 x 12 x 2,5 cm hatte und auf einer Stahlplatte auflag und mit einer Stahlplatte abgedeckt wurde, wobei der Distanzrahmen und die Stahlplatten aus 8 mm dickem Material gefertigt waren, wurde durch Verschraubung zusammengedrückt. Die Form wurde talkumiert und waagerecht montiert, bis auf die stählerne Deckplatte.

In den Distanzrahmen wurde eine 2 mm dicke ebene Platte aus handelsüblichem Polyphenylensulfid eingelegt, diese dann gleichmäßig mit 40 g der aus Blähgraphit und Bindemittel bestehenden Mischung beschichtet und schließlich eine zweite, entsprechende Platte aus Polyphenylensulfid aufgelegt.

Nach dem Verschließen der Form wurde diese in einem Ofen auf 420°C erhitzt, danach abgekühlt und der gebildete Sandwich aus der Form genommen.

Er bestand aus den beiden Polyphenylensulfid-Deckplatten, mit denen das Kernmaterial aus der expandierten Blähgraphitmischung fest verbunden war. Der Sandwich hatte die Dimensionen des durch den Distanzrahmen vorgegebenen Innenraums der Form. Das Kernmaterial hatte eine mittlere Dichte von 0,15 g/cm³. Bei einem Scherversuch löste sich die Deckplatte nicht vom Kernmaterial, sondern trat ein Aufbrechen im Kernmaterial ein.

### Beispiel 2

Es wurde verfahren wie in Beispiel 1, jedoch wurde als Blähgraphit ein handelsüblicher SOₓ-Blähgraphit mit ähnlichem Expansionsverhalten verwendet. Der Blähgraphit wurde ohne Bindemittel eingesetzt, die Heiztemperatur auf 620°C gesteigert.

Es bildete sich ein Sandwich, bei dem das Kernmaterial in das Deckschichtmaterial soweit eingedrückt war, daß eine mit dem Deckschichtmaterial getränkte Randzone mit integralem Charakter entstanden war. Die Oberflächenschicht bestand aus getemperten Polyphenylensulfid.

### Beispiel 3

Es wurde verfahren wie in Beispiel 1, jedoch wurde anstelle von Polyphenylensulfid als beidseitige Deckschicht eine 2,5 mm dicke Scheibe aus Fensterglas und eine Heiztemperatur von 850°C angewendet. Als Trennmittel wurde hier eine Aluminiumfolie eingesetzt. Um Spannungen zu vermeiden wurde im Laufe von 18 h abgekühlt. Aus der Form wurde ein maßgenauer Sandwich entnommen, dessen Deckschichten aus Glas rißfrei und fest mit dem Kernmaterial verbunden waren.

### Beispiel 4

Es wurde verfahren wie in Beispiel 3, jedoch wurde anstelle der Fensterglasscheibe auf den Boden der Form eine Schicht aus der gleichen Gewichtsmenge Glaspulver eingebracht und als obere Deckschicht eine Doppellage an entschlichtetem Glasseidengewebe in dichter Leinenbindung aufgelegt. Nach dem Entformen wurde ein Sandwich mit rißfreier glasiger Oberfläche erhalten. In diesem Falle erfolgte eine stärkere Durchdringung von Kernmaterial und Deckschicht als bei Beispiel 3.

### Beispiel 5

Es wurde verfahren wie in Beispiel 1, jedoch wurde als Bodenschicht und als Deckschicht je 3 mm hoch eine bei 350°C vorgetrocknete Pulvermischung aus 70 Teilen Aluminium-Hydroxyd und 30 Teilen Colemanit in die Form eingebracht. Als Trennmittel wurde zusätzlich zu Talkum noch eine Doppellage Packpapier (Natron-Kraftpapier) eingesetzt. Die Heiztemperatur betrug 950°C.

Nach dem Abkühlen wurde ein Sandwich erhalten, dessen untere Deckschicht aus einer keramischen Sinterschicht und dessen Kern aus einer expandierten Blähgraphitmischung mit einem mittleren Raumgewicht von 0,1 g/cm³ bestand.

### Beispiel 6

Es wurde verfahren wie in Beispiel 1, jedoch wurde eine Mischung aus 80 Teilen SOₓ-Blähgrahit und 20 Teilen neutralem Ethylendiaminphosphat als bindemittelhaltiges Expansionsmaterial verwendet. Außerdem wurden anstelle von Polyphenylensulfid-Platten Polycarbonat-Platten (Makrolon®) verwendet. Die Heiztemperatur betrug 350°C. Nach dem Entformen wurde eine Sandwichplatte mit Polycarbonatdeckschichten erhalten, die mit dem Kernmaterial fest verbunden waren.

### Beispiel 7

Auf eine 2 mm dicke, kreisförmige Platte aus Geräteglas wurde eine 1,5 mm dicke Schicht aus NOₓ-Blähgraphit und Bindemittel (Mischung wie in Beispiel 1) aufgestreut und mit einer gleichen Glasplatte bündig abgedeckt. Dieses Paket wurde in einem Ofen auf 850°C aufgeheizt, wobei ein 1,5 cm dicker Sandwich entstand. Dann wurde dieser Sandwich bei 900°C in einer Preßform mit einem Halbkugelstempel zu einer Halbkugel verpreßt, wobei die Sandwichstruktur erhalten blieb. Nach langsamen Abkühlen wurde der Formling entnommen.

### Beispiel 8

Es wurde analog Beispiel 1 gearbeitet. Zwischen die Polyphenylensulfid-Deckschichten wurde jedoch ein Gemisch aus gleichen Teilen a) Blähgrahit + Bindemittel (Mischung wie in Beispiel 1) und b) Bitumen eingebracht. Die Heiztemperatur betrug 460°C. Der erhaltene Sandwich erwies sich als besonders druckfest.

### Beispiel 9

Es wurde verfahren wie in Beispiel 1, jedoch wurden anstelle der Polyphenylensulfid-Platten zwei gleich dimensionierte Platten aus handelsüblichem Aluminiumblech verwendet und eine Heiztemperatur von 680°C angewendet. Es wurde ein Sandwich mit fest auf dem Kernmaterial haftenden Aluminiumdeckschichten erhalten.

### Beispiel 10

Es wurde verfahren wie in Beispiel 1, jedoch wurde in die Innenseite der stählernen Abdeckplatte eine linsenförmige Vertiefung und ein Schriftzug eingefräßt. Nach dem Entformen waren auf der Oberseite des gebildeten Sandwiches die Linse und der Schriftzug abgebildet, da das thermoplastische Deckschichtmaterial durch den Expansionsdruck des Kernmaterials in die mit Vertiefung und Schriftzug versehene Abdeckplatte hineingedrückt worden war.

### Beispiel 11

Es wurde verfahren wie in Beispiel 1, jedoch wurden je eine 2 mm dicke Aluminiumplatte als obere und untere Deckschicht und jeweils Granulate von ca. 3 mm Durchmesser verwendet, die aus 70 % NOₓ-Blähgraphit und 30 % folgender Bindemittel hergestellt worden waren:
A) Bindemittel wie in Beispiel 1,
B) Handelsübliches Ammoniumpolyphosphat (90 %) im Gemisch mit 10 % Rohrzucker,
C) Sek. Ammonphosphat (90 %) im Gemisch mit 10 % Carboxymethylcellulose,
D) Neutralisationsprodukt aus Ethylendiamin und ortho-Phosphorsäure (90 %) im Gemisch mit 10 % löslicher Stärke und
E) kein Bindemittel, 100 % NOₓ-Blähgraphit.

In die Form wurden jeweils 30 g Blähgraphitmischung eingeschüttet, erhitzt wurde für 30 Minuten auf 600°C. Nach dem Abkühlen wurde aus der Form jeweils ein Sandwich mit fest haftender Deckschicht entnommen, die bei A) bis D) nur unter Zerstörung des Kernmaterials abgezogen werden konnte.

Aus dem Kernmaterial der mit A) bis E) hergestellten Sandwiches wurde je ein Quader der Maße 2,5 x 3,0 x 2,0 cm geschnitten und in einen auf 700°C geheizten Ofen mit Luftzutritt eingebracht. Das Kernmaterial hatte in allen Fällen ein spezifisches Gewicht von etwa 0,1 g/cm³. Die durch die Phosphorverbindungen im Bindemittel erzielte Stabilisierung gegen oxydativen Angriff wurde anhand des Gewichtsverlustes nach 2 und 3 Stunden bei 700°C wie folgt festgestellt:

| Probe | % Verlust nach | |
|---|---|---|
| | 2 h | 3 h |
| A) | 5,5 | 5,5 |
| B) | 16,2 | 16,2 |
| C) | 13,3 | 13,4 |
| D) | 9,9 | 9,9 |
| E) | 55,4 | 70,1 |

Hierbei fällt die besonders gute Stabilisierung des Kernmaterials mit dem Phosphonatbindemittel aus Beispiel 1 (Probe A)) auf.

### Beispiel 12

Eine stählerne Zylinderform bestehend aus zwei Halbschalen mit ingesamt 2,7 l Volumen und einem Durchmesser von 4,5 cm wurde liegend mit 300 g Granulat gemäß Beispiel 11A) gefüllt, nachdem sie zuvor mit 100 µm-Folien ausgeschlagen worden war.

Als Folien wurden verwendet:
A) Polyimidfolie des Handels,
B) Polyphenylensulfidfolie,
C) Aluminiumfolie,
D) Kupferfolie und
E) Silberfolie.

Die Form wurde in liegender Lage 30 Min. auf 600°C erhitzt und dann abgekühlt.

In allen Fällen hatte sich ein mit der jeweiligen Deckschicht fest kaschierter Schaumstoffstab gebildet, dessen Kernmaterial eine Dichte von ca. 0,95 g/cm³ besaß.

Derartiges Stabmaterial ist als Halbzeug zur Herstellung von Abschirmelementen für hochbelastete elektronische Bauteile verwendbar.

### Beispiel 13

Es wurde verfahren wie in Beispiel 12, wobei anstelle der Folie ein Hüllrohr aus Aluminium verwendet wurde. Es wurde ein Stoßenergie-Absorptionselement erhalten, das zum Abfangen von achsial gerichteten Stößen geeignet ist.

## Patentansprüche

1. Sandwichartige Leichtformkörper, dadurch gekennzeichnet, daß ihr Kernmaterial
a) aus formgemäß expandiertem NOₓ- und/oder SOₓ-Blähgraphit
b) als Bindemittel Thermoplaste und/oder ortho-, meta-, Pyro- und/oder Polyphosphate, Phosphonate, Borate und/oder Silikate, die als kationische Komponenten Metallionen von Metallen der 1. bis 3. Gruppe des Periodensystems, Ammonium und/oder Amine und/oder Destillationsrückstände und/oder Kohlepulver und
c) mindestens einer Deckschicht aus einem thermoplastischen Material besteht.

2. Leichtformkörper nach Anspruch 1, dadurch gekennzeichnet, daß sie als Bindemittel Phosphate und/oder Phosphonate enthalten.

3. Leichtformkörper nach Anspruch 2, dadurch gekennzeichnet, daß sie mindestens eine Deckschicht aus Gesteinsmehl, Schlacke, Emailfritten, Tonmineralien, Porzellanerden, keramischen Grundmaterialien, Gläsern, Metall, glaskeramischer Masse, organisch-anorganischem Kunststoff oder organischaromatischem Kunststoff enthalten.

4. Leichtformkörper nach Anspruch 1, dadurch gekennzeichnet, daß sie mindestens eine Deckschicht aus thermoplastischem Material mit einer Glastemperatur von über 150°C aufweisen.

5. Verfahren zur Herstellung von sandwichartigen Leichtformkörpern gemäß Anspruch 1, dadurch gekennzeichnet, daß man zwischen zwei Deckschichten, von denen mindestens eine aus einem thermoplastischen Material besteht, expansionsfähigen Blähgraphit enthaltendes Material sich bei Temperaturen im Bereich 200 bis 2000°C expandieren läßt.

6. Verfahren nach Anspruch 5, dadurch gekennzeichnet, daß man teilweise expandierten Blähgraphit einsetzt.

7. Verfahren nach Ansprüchen 5 und 6, dadurch gekennzeichnet, daß man die Blähgraphit-Expansion unter Ausschluß von Sauerstoff stattfinden läßt.

8. Verwendung von sandwichartigen Leichtformkörpern des Anspruchs 1 beim Bau von Geräten und Gehäusen, die bei hohen Temperaturen einsetzbar sind, Stoßabsorbern, Hochgeschwindigkeits-Flugkörpern, Raketenmotoren, Turbinen, Verbrennungsmotoren, Abgaskanälen, Antennen und thermischen, elektromagnetischen und/oder elektrischen Abschirm-und Isoliereinrichtungen.

## Claims

1. Sandwich-like lightweight shaped articles, characterised in that their core material consists of
a) expandable Noₓ and/or Soₓ graphite expanded according to the mould
b) as binders, thermoplastics and/or ortho-, meta-, pyro- and/or polyphosphates, phosphonates, borates and/or silicates, which contain metal ions of metals of group 1 to 3 of the periodic table, ammonium and/or amines as the cationic components, and/or distillation residues and/or coal powder and
c) at least one covering layer consisting of a thermoplastic material.

2. Lightweight shaped articles according to Claim 1, characterised in that they contain phosphates and/or phosphonates as binders.

3. Lightweight shaped articles according to Claim 2, characterised in that they contain at least one covering layer of rock powder, slag, enamel frits, clay minerals, porcelain clays, ceramic base materials, glasses, metal, glass-ceramic composition, organic-inorganic plastic or organic-aromatic plastic.

4. Lightweight shaped articles according to Claim 1, characterised in that they contain at least one covering layer of thermoplastic material having a glass transition temperature above 150°C.

5. Process for the production of sandwich-like light-weight shaped articles according to Claim 1, characterised in that material containing expandable graphite which is capable of expansion is allowed to expand at temperatures in the range from 200 to 2000°C between two covering layers, at least one of which consists of a thermoplastic material.

6. Process according to Claim 5, characterised in that partially expanded expandable graphite is used.

7. Process according to Claims 5 and 6, characterised in that the expandable graphite is expanded with the exclusion of oxygen.

8. Use of sandwich-like lightweight shaped articles of Claim 1 in the construction of apparatuses and housings which can be used at high temperatures, shock absorbers, high-speed missiles, rocket engines, turbines, combustion engines, exhaust gas ducts, antennae and thermal, electromagnetic and/or electrical shielding and insulating equipment.

## Revendications

1. Corps moulé légers à structure en sandwich caractérisés en ce que leur matière de noyau consiste
a) en graphite gonflable par NOₓ et/ou SOₓ, expansé aux dimensions,
b) contient en tant que liants des matières thermoplastiques et/ou des ortho-, méta-, pyro- et/ou poly-phosphates, des phosphonates, borates et/ou silicates dont les cations sont des ions de métaux des groupes 1 à 3 de la classification périodique, des ions ammonium et/ou d'amines ; et/ou des résidus de distillation et/ou de la poudre de charbon
c) et porte au moins une couche de couverture consistant en une matière thermoplastique.

2. Corps moulés légers selon la revendication 1, caractérisés en ce qu'ils contiennent en tant que liants des phosphates et/ou des phosphonates.

3. Corps moulés légers selon la revendication 2, caractérisés en ce qu'ils contiennent au moins une couche de couverture consistant en farine minérale, scories, frittes d'émaux, minéraux argileux, terre à porcelaine, matières premières céramiques, verres, métal, masses céramiques vitreuses, résines synthétiques organiques-minérales ou résines synthétiques organiques aromatiques.

4. Corps moulés légers selon la revendication 1, caractérisés en ce qu'ils ont au moins une couche de couverture consistant en une matière thermoplastique ayant une température de transition du second ordre supérieure à 150°C.

5. Procédé pour la préparation de corps moulés légers à structure en sandwich selon la revendication 1, caractérisé en ce que, entre deux couches de couverture dont l'une au moins consiste en une matière thermoplastique, on provoque l'expansion d'une matière contenant du graphite gonflable, apte à l'expansion, à des températures dans l'intervalle de 200 à 2 000°C.

6. Procédé selon la revendication 5, caractérisé en ce que l'on met en oeuvre du graphite gonflable déjà partiellement expansé.

7. Procédé selon les revendications 5 et 6, caractérisé en ce que l'on provoque l'expansion du graphite gonflable à l'abri de l'oxygène.

8. Utilisation des corps moulés légers à structure en sandwich de la revendication 1 pour la construction d'appareils et de logements utilisables à haute température, d'absorbeurs de choc, de corps volants à grande vitesse, de moteurs de fusée, de turbines, de moteurs à combustion, de conduits d'échappement de gaz résiduaires, d'antennes et de dispositifs de barrière et d'isolation thermique, électro-magnétique et/ou électrique.
